# NEUE EUROPÄISCHE PATENTSCHRIFT

(11) **EP 3 172 261 B2**
(45) Veröffentlichungstag und Bekanntmachung des Hinweises auf die Entscheidung über den Einspruch: **04.05.2022**
(45) Hinweis auf die Patenterteilung: 24.10.2018
(21) Anmeldenummer: 15788316.6
(22) Anmeldetag: 20.07.2015
(51) Int. Cl.: C08G 77/60, C01B 33/107, C07F 7/12

(54) **VERFAHREN ZUR SPALTUNG VON SILICIUM-SILICIUM-BINDUNGEN UND/ODER VON SILICIUM-CHLOR-BINDUNGEN IN MONO-, POLY- UND/ODER OLIGOSILANEN**
METHOD FOR CLEAVING SILICON-SILICON BINDINGS AND/OR SILICON-CHLORINE BINDINGS IN MONOSILANES, POLYSILANES AND/OR OLIGOSILANES
PROCÉDÉ POUR LA DISSOCIATION DE LIAISONS SILICIUM-SILICIUM ET/OU DE LIAISONS SILICIUM-CHLORE DANS DES MONOSILANES, DES POLYSILANES ET/OU DES OLIGOSILANES

(30) Priorität: 22.07.2014 DE 102014010674
(43) Veröffentlichungstag der Anmeldung: 31.05.2017
(73) Patentinhaber: Momentive Performance Materials GmbH, 51368 Leverkusen (DE)
(72) Erfinder: AUNER, Norbert, 61479 Glashütten (DE); HOLTHAUSEN, Max., C., 61440 Oberursel (DE); NEUMEYER, Felix, 63303 Dreieich (DE)
(74) Vertreter: Gille Hrabal Partnerschaftsgesellschaft mbB Patentanwälte
(86) Internationale Anmeldenummer: PCT/DE2015/000359
(87) Internationale Veröffentlichungsnummer: WO 2016/011993

(56) Entgegenhaltungen:
- EP-A1- 0 635 510
- US-A1- 2012 071 678

## Beschreibung

Die vorliegende Erfindung betrifft ein Verfahren zur Spaltung von Silicium-Silicium-Bindungen und/oder Silicium-Chlor-Bindungen in Poly- und/oder Oligosilanen.

Polysilane sind an sich kettenförmig aufgebaute Silicium-Wasserstoff-Verbindungen der allgemeinen Formel SiₙH₂ₙ₊₂. Das hier beschriebene Verfahren deckt auch substituierte Polysilane ab, bei denen Wasserstoffatome durch entsprechende Substituenten, insbesondere Halogene, ersetzt sind.

Bei Oligosilanen handelt es sich um entsprechende Oligomere der Polysilane, die insbesondere durch Abbau von Polymeren gewonnen werden, aber auch als meist unerwünschte Nebenprodukte bei der Herstellung von Mono- (Müller-Rochow/Direkt-Prozess) und Oligosilanen anfallen.

Es ist bekannt, halogenierte Polysilane der allgemeinen Zusammensetzung (X₂Si)ₙ bzw. X₃Si-(X₂Si)ₙ-SiX₃ (X = Halogen) auf zwei Wegen zu synthetisieren. Ein thermisches Verfahren zur Herstellung von halogenierten Polysilanen ist in der EP 2 296 804 B1 beschrieben. Derartige thermisch hergestellte halogenierte Polysilane besitzen einen verzweigten Aufbau mit einem hohen Gehalt an verzweigten kurzkettigen und zyklischen Verbindungen, wobei deren Verzweigungsstellen einen Anteil am Gesamtgemisch von mehr als 1 Prozent besitzen.

Als zweiter Weg ist ein plasmachemisches Verfahren zur Herstellung von halogenierten Polysilanen bekannt, wie dies beispielsweise in der DE 10 2008 025 261 B4 beschrieben ist. Derartige plasmachemisch hergestellte halogenierte Polysilane besitzen einen vorwiegend linearen Aufbau. Beide Varianten haben unterschiedliche mittlere Molmassen.

Aus derartigen halogenierten Polysilanen lassen sich halogenierte Oligosilane ableiten, die als Ausgangsstoffe für amorphes bzw. kristallines Silicium Bedeutung haben. Solche Oligosilane sind besonders interessant für die Herstellung von Si-Schichten und Si-Filmabscheidungen.

Es gibt eine Reihe von Schutzrechten, die sich mit dem hier angesprochenen Sachgebiet (und besonders dem Disilanrückstand des Direkten Prozesses) befassen. So ist beispielsweise in der EP 0574912 B1 ein Verfahren für die Herstellung von Methylchlorsilanen aus dem durch einen Direktprozess gewonnenen hochsiedenden Rest beschrieben. Die EP 1533315 A1 offenbart ein Verfahren zur Herstellung von Alkylchlorsilanen aus Rückständen einer Direktsynthese. Die WO 2011/107360 A1 beschreibt die Herstellung von Disilanen, die aminkatalysiert und mit HCl spaltbar sind.

Eine Vielzahl von weiteren Schutzrechten betrifft die Umwandlung der entsprechenden Hochsieder in monomere Alkylchlorsilane. Sämtliche beschriebenen Verfahren sind jedoch sehr aufwändig und mit hohen apparativen Schwierigkeiten verbunden. Beispielsweise wird in der EP 635510 A1 die Spaltung der Hochsieder mit HCl und einem aluminiumchloridhaltigen Katalysator bei T > 250°C in Monosilane beschrieben.

Die EP 1 179 534 A1 offenbart ein Verfahren zum Aufarbeiten von Rückständen der Direktsynthese von Organochlorsilanen. Aus der EP 0 250 823 B1 ist ein Verfahren zur Herstellung von Organooxyhalogensilanen in Gegenwart von Katalysatoren bekannt. Die DE 3 924 193 C2 beschreibt ein Verfahren zur Herstellung eines alkoxyfunktionellen Methylpolysilans. Die DE 3 741 946 A1 offenbart die Herstellung von Polysilanen mit mindestens 8 Si-Atomen.

Der vorliegenden Erfindung liegt die Aufgabe zugrunde, ein Verfahren zur Spaltung von Silicium-Silicium-Bindungen und/oder von Silicium-Chlor-Bindungen in Poly- und/oder Oligosilanen zur Verfügung zu stellen, das besonders einfach und damit kostengünstig ist.

Diese Aufgabe wird erfindungsgemäß durch ein Verfahren zur Spaltung von Silicium-Silicium-Bindungen und/oder von Silicium-Chlor-Bindungen in Poly- und/oder Oligosilanen gelöst, bei dem man das Poly- und/oder Oligosilan in Ether oder Ether-Salzsäure-Lösung löst oder suspendiert.

Bei den erfindungsgemäß verwendeten Ethern handelt es sich um Substanzen der allgemeinen Formel R¹-O-R², wobei R¹ und R² jeweils beliebige Alkyl- und/oder Aryl-Reste sein können. Unter Umständen können auch zyklische Ether in hoher Verdünnung mit inerten Lösungsmitteln Verwendung finden. Vorzugsweise findet Diethylether Verwendung.

Ferner findet bei dem erfindungsgemäßen Verfahren eine Ether-Salzsäure-Lösung, insbesondere Diethylether-Salzsäure-Lösung, Verwendung, die bevorzugt zum Einsatz gelangt. Ebenfalls wird sowohl mit Ether als auch mit der Ether-Salzsäure-Lösung (Diethylether-Salzsäure-Lösung) eine präparativ einfache Spaltung der Silicium-Silicium-Bindungen und/oder Silicium-Chlor-Bindungen in den Poly- oder Oligosilanen erreicht, wobei hier insbesondere in einem einzigen Reaktionsschritt entsprechende Endprodukte erzeugt werden können. Die Spaltung der Si-Cl-Bindungen in Monosilanen erfolgt dagegen nicht durch Ether allein, sondern erfordert den Einsatz von Ether-Salzsäure-Lösungen (Diethylether-Salzsäure-Lösungen).

Ein Beispiel des erfindungsgemäßen Verfahrens betrifft ein Verfahren, bei dem man aus halogenierten Polysilanen, insbesondere aus chlorierten Polysilanen, speziell perchlorierten Polysilanen (PCS), durch Spaltung von Silicium-Silicium-Bindungen halogenierte Oligosilane, insbesondere chlorierte Oligosilane, herstellt. Diese Verfahrensvariante bezieht sich somit auf die gezielte Darstellung definierter Oligosilane aus halogenierten Polysilanen.

Eine bevorzugte Variante des erfindungsgemäßen Verfahrens zeichnet sich dadurch aus, dass man das halogenierte Polysilan in Ethylether (Et₂O) oder Ethylether-Salzsäure-Lösung, insbesondere Diethylether oder Diethylether-Salzsäure-Lösung, löst oder suspendiert.

Als halogenierte Oligosilane werden insbesondere solche mit der Formel SiₙX₂ₙ₊₂, insbesondere solche mit der Formel SiₙCl₂ₙ₊₂, dargestellt.

Bei bevorzugten Ausführungsformen des erfindungsgemäßen Verfahrens wird thermisch hergestelltes halogeniertes Polysilan, insbesondere perchloriertes Polysilan (T-PCS), oder plasmachemisch hergestelltes halogeniertes Polysilan, insbesondere perchloriertes Polysilan (P-PCS), umgesetzt. Nachfolgend werden einige Verfahrensvarianten zur Darstellung definierter Oligosilane beschrieben.

Bei einer ersten Variante wird zur Darstellung von Si₂Cl₆ T-PCS mit Et₂O umgesetzt.

Bei einer zweiten Variante wird zur Darstellung von X-Si(SiCl₃)₃ (X = H, Cl) T/P-PCS mit HCl in Et₂O umgesetzt. Bei noch einer Variante setzt man zur Darstellung von X₂Si(SiCl₃)₂ (X = H, Cl) T/P-PCS (also thermisch und/oder plasmachemisch hergestelltes PCS) mit HCl in Et₂O um.

Die aus der Umsetzung gewonnene Lösung wird isoliert, insbesondere von anfallenden festen Niederschlägen, wenn diese anfallen.

Mindestens ein halogeniertes Oligosilan wird aus der erhaltenen Lösung isoliert, beispielsweise durch Abkondensieren, Abdekantieren oder Destillieren.

Bei einer bevorzugten Ausführungsform des erfindungsgemäßen Verfahrens werden chlorierte Oligosilane aus thermisch hergestellten perchlorierten Polysilanen (T-PCS) dargestellt. Thermisch hergestelltes PCS ist synthetisch leichter auf konventionellem Weg zugänglich als plasmachemisch hergestelltes PCS (P-PCS). T-PCS wird vorzugsweise in Et₂O gelöst. Die Substanz ist komplett löslich. Zunächst findet eine Eintrübung der Lösung statt, die sich dann aber wieder aufklärt. Nach etwa 2 h Reaktionszeit bei Raumtemperatur werden folgende Produkte erhalten:

Si₂Cl₆ ≥ SiCl₄ > Si₃Cl₈ > iso-Si₄Cl₁₀ ≈ neo-Si₅Cl₁₂

Die Produkte wurden durch Vergleich mit ²⁹Si-NMR-Spektren von authentischen Proben charakterisiert.

Bei einer weiteren Ausführungsform des erfindungsgemäßen Verfahrens wurde P-PCS in Et₂O gelöst bzw. suspendiert. Es wurden eine gelb-braune Suspension und ein gelb-brauner Niederschlag erhalten. Nach Dekantieren der tiefbraunen Lösung werden folgende Produkte ²⁹Si-NMR-spektroskopisch charakterisiert:

Si₂Cl₆ ≥ SiCl₄ > Si₃Cl₈ > iso-Si₄Cl₁₀ ≈ neo-Si₅Cl₁₂

Bei der Umsetzung von T-PCS oder P-PCS mit Ether entstehen neben den angegebenen Oligosilanen noch geringe Mengen an Si(SiCl₃)₄.

Bei dem Feststoff handelte es sich offensichtlich um unlösliches hochpolymeres PCS. Dieses konnte durch eine anschließende Chlorierung ebenfalls in perchlorierte Oligosilane, besonders Si₂Cl₆, überführt werden.

Im Vergleich zur Darstellung aus T-PCS ergab sich bei P-PCS ein deutlich schlechterer Si₂Cl₆-Zugang durch Bildung eines Niederschlages, d.h. ein Polymer mit höherem Molekulargewicht.

Die erfindungsgemäß eingesetzte Ether-Salzsäure-Lösung, insbesondere Diethylether-Salzsäure-Lösung,(HCl-gesättigte Etherlösung) wurde hergestellt, indem bei Raumtemperatur so lange HCl-Gas in Ether eingeleitet wurde, bis eine gesättigte Lösung (ca. 5 M) erhalten wurde.

Thermisch hergestelltes perchloriertes Polysilan (T-PCS) wurde mit dieser Lösung von HCl in Et₂O in einem molaren Verhältnis SiCl₂-Einheit/HCl von etwa 1/1 versetzt. Als Produkte der Umsetzung bei Raumtemperatur wurden nach 10 h Reaktionszeit erhalten:

Si₂Cl₆ > HSiCl₃ > HSi (SiCl₃)₃ > H₂Si(SiCl₃)₂ > H₂SiCl₂

u. a. hochmolekulare, unlösliche Polysilane.

Bei einer entsprechenden Umsetzung, jetzt mit einem molaren Verhältnis von 4:1 und 18 h Reaktionszeit bei Raumtemperatur, ergaben sich folgende Produkte:

Si₂Cl₆ >> HSi(SiCl₃)₃|HSiCl₃|H₂Si(SiCl₃)₂|Si₃Cl₈|H₂SiCl₂ + "höhere"

nicht mehr identifizierte H/Cl-Oligo bzw. Polysilane.

Es wurde festgestellt, dass der Abbau der perchlorierten Polysilane T/P-PCS zu niedermolekularen Chlorsilanen mit höherer HCl-Konzentration in Et₂O zunimmt. Wenn eine gezielte Darstellung von höhermolekularen Oligosilanen, z.B. von HSi(SiCl₃)₃ und H₂Si(SiCl₃)₂ gewünscht wird, wird vorzugsweise mit geringeren HCl-Mengen gearbeitet. Si₂Cl₆ fällt in beiden Syntheserouten bevorzugt an.

Ferner wurde P-PCS mit Et₂O und HCl in einem molaren Verhältnis von 4/1 (18 h, Raumtemperatur) umgesetzt. Als Produkte wurden erhalten:
Eine Mischung aus:

HSi(SiCl₃)₃ > ClSi(SiCl₃)₃ > Si₂Cl₆ > Si₃Cl₈ > HSiCl₃ > H₂Si(SiCl₃)₂ > H₂SiCl₂

Daneben fielen weitere (noch nicht identifizierte) Oligosilane in geringen Mengen an.

Eine weitere Ausführungsform des erfindungsgemäßen Verfahrens zeichnet sich dadurch aus, dass eine Lösung von HCl in Et₂O zur Spaltung von Poly- oder Oligosilanen und dem nachfolgenden Aufbau von Siloxanen eingesetzt wird. Dabei findet speziell eine Lösung von HCl in Diethylether Verwendung, mit der jede Si-Si- sowie Si-Cl-Bindung, auch in Monosilanen, gespalten und in eine Siloxaneinheit überführt wird. Insbesondere lassen sich dabei aus Organohalogendisilanen, z.B. MeₙSi₂Cl₆₋ₙ (Rückstand des Direkten Prozesses, n = 1-6) zyklische, käfigartige und/oder lineare Siloxane erzeugen.

Auch wird das erfindungsgemäße Verfahren vorzugsweise zum Abbau von Mischungen aus Organohalogendisilanen, insbesondere mit chlorierten Monosilanen, eingesetzt.

Die Erfindung wird nachfolgend anhand von Ausführungsbeispielen erläutert.

Die Produkte wurden hierbei wie folgt charakterisiert:
NMR-Analysen wurden an einem Bruker AV500 Spektrometer durchgeführt. GC-MS-Analysen wurden an einem Gaschromatographen Thermo Scientific trace GC ultra mit gekoppeltem Massenspektrometer ITQ 900 MS vorgenommen. Die stationäre Phase (Machery-Nagel PERMABOND Silane) hatte eine Lange von 50 m mit einem Innendurchmesser von 0,32 mm. Ein µL der Probenlösung wurde injiziert, wobei 1/25 mit Hilfe von Helium als Trägergas und einer Durchflussrate von 1,7 m L/min durch die stationäre Phase getragen wurden. Die Temperatur der stationären Phase ist zunächst 50°C für zehn Minuten, wurde dann mit einer Rate von 20°C/min bis auf 250°C erhöht und für weitere 10 Minuten auf dieser Endtemperatur gehalten. Nach Austritt aus der Säule wurde mit 70 eV ionisiert und kationische Fragmente wurden im Bereich von 34 - 600 bzw. 34 - 900 m/z Masse pro Ladung gemessen.

### Herstellung der HCl/Et₂O-Lösung

Diethylether (p.a. stabilisiert mit Butylhydroxytoluol) wurde vorher über Natrium/Benzophenon getrocknet und destilliert. Anschließend wurde in einem Schlenkkolben mit Gaseinleitungsrohr HCl-Gas, welches vorher durch konzentrierte Schwefelsäure geleitet wurde, in den Diethylether eingetragen. Hierbei kam es auch zu einer leichten Erwärmung der Lösung. Die Sättigung wurde erkenntlich, als die ausgeleitete Gasmenge gleich der eingeleiteten Gasmenge war (angezeigt durch Blasenzähler). Zur Vervollständigung wurde dieser Zustand weitere 30 Minuten aufrechterhalten.

Durch Auswiegen wird ermittelt, dass sich 76 g HCl-Gas in 298 g Diethylether lösen (∼5 M). Die Molarität der HCl/Et₂O-Lösung wurde zusätzlich noch durch Titration eines aliquoten Teils mit Wasser und NaOH bestimmt.

### Ausführungsbeispiel 1

T-PCS (im Vakuum weitestgehend von SiCl₄ befreit; 64.64 g) wurde mit einer gesättigten Lösung von HCl in Diethylether (5 M, 113 mL) unter Eiskühlung (0 °C) umgesetzt (a). Die bräunliche Lösung wurde für 16 Stunden gerührt und graduell auf Raumtemperatur (24 °C) erwärmt, woraufhin ein Farbwechsel nach schwach gelb erfolgte.
Die flüchtigen Bestandteile der Reaktionsmischung wurden im Vakuum (0.1 mbar) in eine auf -196 °C (fl. N₂) abgekühlte Kühlfalle einkondensiert (b). Dieses Kondensat (c, 145 g) wurde anschließend auf Raumtemperatur erwärmt und bei Normaldruck bis zu einer Siedetemperatur von 80 °C destilliert. Die Zusammensetzung des Destillats (d, 104 g) ist in Spalte **E** angegeben (einschließlich der Mengenangaben in % und den verbindungscharakteristischen ²⁹Si-NMR-Verschiebungswerten). Der Rückstand dieser Destillation (e, 23 g) wurde erneut bei vermindertem Druck (Membranpumpe; 30 mbar) bis zu einer Siedetemperatur von max. 130 °C fraktioniert destilliert, wobei zwei Fraktionen erhalten wurden. Der Destillationsrückstand (f, 2 g) enthält die in Spalte **C** aufgelisteten Verbindungen, das Destillat (g, 16 g) die Verbindungen in Spalte **D**. Der Kondensationsrückstand aus (b) (h, 10 g) wurde bei vermindertem Druck an der Drehschieberpumpe (0.1 mbar) bis zu einer Siedetemperatur von 130 °C destilliert. Der nach dieser Destillation verbliebene Rückstand (i, 7 g) besteht größtenteils aus unlöslichen chlorierten Polysilanen sowie Spuren der in Spalte **A** genannten Verbindungen. Im Destillat aus (h) (j, 3 g) werden die Verbindungen der Spalte **B** identifiziert.

### Abb. 1

### Ausführungsbeispiel 2

P-PCS (im Vakuum weitestgehend von SiCl₄ befreit; 4.9 g) wurde mit einer gesättigten Lösung von HCl in Diethylether (5 M, 2.5 mL) unter Eiskühlung (0 °C) umgesetzt (a). Die rot-braune Lösung wurde für 14 Stunden gerührt und graduell auf Raumtemperatur (24 °C) erwärmt, woraufhin eine nur geringfügige Entfärbung erfolgte.
Die flüchtigen Bestandteile der Reaktionsmischung wurden im Vakuum (0.1 mbar) in eine auf -196 °C (fl. N₂) abgekühlte Kühlfalle einkondensiert (b). Die Zusammensetzung dieses Kondensats (c, 4.2 g) ist in Spalte **B** angegeben (einschließlich der Mengenangaben in % und den verbindungscharakteristischen ²⁹Si-NMR-Verschiebungswerten). Der Kondensationsrückstand (d, 2.2 g) besteht aus den in Spalte **A** angegebenen Verbindungen.

### Abb. 2

### Ausführungsbeispiel 3

In diesem Verfahren werden "spaltbare" Disilane MeₓSi₂Cl₆₋ₓ (x = 0-3) und "nicht spaltbare" Disilane (x = 4-6) in einem einzigen Reaktionsschritt in monomere funktionelle Silane gespalten, die sich anschließend nach einer Austauschreaktion Si-X => Si-OEt (X = H, Cl) direkt bevorzugt in methyl- und/oder weniger bevorzugt in ethoxysubstituierte zyklische Siloxane überführen lassen. Das hier eingesetzte Reagenz zur Si-Si- und Si-Cl-Bindungsspaltung ist eine mit HCl-Gas gesättigte Diethyletherlösung (HCl/Et₂O).

Die für die Untersuchungen eingesetzten Disilane MeₓSi₂Cl₆₋ₓ (x = 0 bis 6) und Me₅Si₂H wurden käuflich erworben und sind literaturbekannt. Sie wurden GC-MS-analytisch und NMRspektroskopisch (¹H, ²⁹Si-NMR) auf ihre Reinheit überprüft. Die ermittelten stoffspezifischen chemischen Verschiebungswerte stimmen mit Literaturdaten überein (s. besonders R. Lehnert, M. Höppner, H. Kelling, Z. anorg. allg. Chem. 1990, 591, 209-213). Gleiches gilt für die cyclischen, linearen und käfigartigen Siloxane, die als Reaktionsprodukte aus der Umsetzung der Disilane MeₓSi₂Cl₆₋ₓ (x = 0 bis 6) und Me₅Si₂H erhalten wurden. Da diese Siloxane als Grundbausteine zum technischen Aufbau von Silikonen dienen, sind auch deren stoffspezifische NMR-Verschiebungswerte literaturbekannt (s. besonders H. Marsmann, 29Si-NMR Spectroscopic Results. In NMR: Oxygen-17 and Silicon-29; Springer-Verlag: New York, 1981, 17, 65-235). Da für alle Edukte und Produkte neben der massenspektrometrischen Fragmentierung die Retentionszeiten im Gaschromatogramm charakteristisch sind, sind in Tab. 1 die eingesetzten sowie durch Substitution Si-Cl => Si-OR (R = Et, n-Bu) dargestellten Disilane mit charakteristischer Retentionszeit (in Minuten) und dem zugehörigem Massenfragment aufgelistet. Die Disilane **1 - 8** sind in einer Reihung abnehmender Anteile im Rückstand der Disilanfraktion des Müller-Rochow-Prozesses aufgelistet. Tab. 2 enthält vergleichbare Daten für monomere Silanspaltprodukte, auch alkoxysubstituiert. Die cyclischen Siloxane **D3** bis **D10** sind in Tab. 3 aufgelistet und in Tab. 4 finden sich die Werte für lineare Siloxane **L2** bis **L13.** Tab. 5 enthält die Daten für käfigartig aufgebaute Silsesquioxane (RSiO_{3/2})ₓ (R = Me, Vi, Et; x = 8, 10, 12) sowie "offene" Vorstufen.

**Tab. 1: GC-MS-Daten für Disilane.**

| **Nr.** | **Disilan** | **R_{T} GC** | **Massenfragment** |
|---|---|---|---|
| **1** | Cl₂MeSi-SiMeCl₂ | 17.06 | 193 [M-CH₃]⁺ |
| **2** | ClMe₂Si-SiMe₂Cl | 16.63 | 186 [M]⁺ |
| **3** | Me₃Si-SiMe₂Cl | 15.47 | 151 [M-H]⁺ |
| **4** | Me₃Si-SiMe₃ | 12.36 | 146 [M]⁺ |
| **5** | Me₃Si-SiMe₂H | 11.02 | 131 [M-H]⁺ |
| **6** | Cl₃Si-SiCl₃ | --- | --- |
| **7** | Me₃Si-SiMeCl₂ | 16.40 | 151 [M-Cl]⁺ |
| **8** | ClMe₂Si-SiMeCl₂ | 17.02 | 171 [M-Cl]⁺ |
| **9** | Cl₂MeSi-SiMeCl(OEt) | 18.04 | 209 [M-C₂H₅]⁺ |
| **10** | (EtO)ClMeSi-SiMeCl(OEt) | 18.64 | 211 [M-Cl]⁺ |
| **11** | Cl₂MeSi-SiMeCl(OBu) | 19.59 | 229 [M-Cl]⁺ |
| **12** | (BuO)ClMeSi-SiMeCl(OBu) | 21.29 | 267 [M-Cl]⁺ |
| **13** | (BuO)₂MeSi-SiMeCl(OBu) | 22.63 | 341 [M+H]⁺ |

**Tab. 2: GC-MS-Daten für Monosilane aus Si-Si-Bindungsspaltungen.**

| **Nr.** | **Silan** | **R_{T} GC** | **MS Basisfragment** |
|---|---|---|---|
| **I** | Me₃SiH | 3.25 | 43 [M-H]⁺ |
| **II** | Me₃SiCl | 6.45 | 93 [M-CH₃]⁺ |
| **III** | Me₃SiOEt | 7.61 | 103 [M-CH₃]⁺ |
| **IV** | MeSiCl₃ | 7.95 | 147 [M]⁺ |
| **V** | Me₂SiCl₂ | 8.53 | 113 [M-CH₃]⁺ |
| **VI** | (EtO)₂MeSiH | 11.89 | 133 [M-H]⁺ |
| **VII** | (EtO)MeSiCl₂ | 12.66 | 143 [M-CH₃]⁺ |
| **VIII** | (EtO)₂SiHCl | 13.58 | 153 [M-H]⁺ |
| **IX** | (EtO)₂MeSiCl | 14.83 | 153 [M-CH₃]⁺ |
| **X** | (BuO)MeSiCl₂ | 16.30 | 151 [M-Cl]⁺ |
| **XI** | (BuO)₂MeSiCl | 18.87 | 225 [M+H]⁺ |

**Tab. 3: GC-MS-Daten für cyclische Methylsiloxane.**

| **Nr.** | **Siloxan** | **R_{T} GC** | **Massenfragment** |
|---|---|---|---|
| **D3** | (Me₂SiO)₃ | 14.21 | 207 [M-CH₃]⁺ |
| **D4** | (Me₂SiO)₄ | 16.78 | 281 [M-CH₃]⁺ |
| **D5** | (Me₂SiO)₅ | 18.46 | 355 [M-CH₃]⁺ |
| **D6** | (Me₂SiO)₆ | 19.91 | 429 [M-CH₃]⁺ |
| **D7** | (Me₂SiO)₇ | 21.29 | 503 [M-CH₃]⁺ |
| **D8** | (Me(EtO)SiO)₄ | 18.62 | 401 [M-CH₃]⁺ |
| **D9** | (Me(EtO)SiO)₂(Me₂SiO)₃ | 19.26 | 415 [M-CH₃]⁺ |
| **D10** | (Me(EtO)SiO)₅ | 21.11 | 505 [M-CH₃]⁺ |

**Tab. 4: GC-MS-Daten für lineare Methylsiloxane.**

| **Nr.** | **Siloxan** | **R_{T} GC** | **Massenfragment** |
|---|---|---|---|
| **L2** | Me₃SiOSiMe₃ | 10.45 | 147 [M-CH₃]⁺ |
| **L3** | Me₃Si(OSiMe₂)OSiMe₃ | 15.50 | 221 [M-CH₃]⁺ |
| **L4** | Me₃Si (OSiMe₂)₂OSiMe₃ | 17.66 | 295 [M-CH₃]⁺ |
| **L5** | Me₃Si (OSiMe₂)₃OSiMe₃ | 19.19 | 369 [M-CH₃]⁺ |
| **L6** | Me₃Si (OSiMe₂)₄OSiMe₃ | 20.41 | 443 [M-CH₃]⁺ |
| **L7** | Me₃Si (OSiMe₂)₅OSiMe₃ | 21.66 | 517 [M-CH₃]⁺ |
| **L8** | (EtO)₂MeSiO(EtOMeSiO)₃SiMe(OEt)₂ | 21.60 | 579 [M-CH₃]⁺ |
| **L9** | MeSi (OSiMe₃)₂O (OSiMe₃) ₂SiMe | 20.21 | 443 [M-CH₃]⁺ |
| **L10** | (EtO)Me₂SiOSiMe₂Cl | 16.28 | 213 [M+H]⁺ |
| **L11** | (EtO)Me₂SiOSiMe₂(OEt) | 16.55 | 207 [M-CH₃]⁺ |
| **L12** | ClMe₂SiSiMe₂-O-SiMe₂SiMe₂Cl | 21.04 | 283 [M-Cl]⁺ |
| **L13** | MeSi (OSiMe₃)₃ | 17.48 | 295 [M-CH₃]⁺ |

**Tab. 5: GC-MS-Daten für Silsesquioxane.**

| **Nr.** | **Siloxan** | **R_{T} GC** | **Massenfragment** |
|---|---|---|---|
| **T1** | (MeSiO_{3/2})₈ | 20.65 | 521 [M-CH₃]⁺ |
| **T2** | (MeSiO_{3/2}) ₁₀ | 22.69 | 655 [M-CH₃]⁺ |
| **T3** | (MeSiO_{3/2})₁₂ | 24.68 | 789 [M-CH₃]⁺ |
| **T4** | C₁₂H₃₄O₁₃Si₈ | 21.09 | 595 [M-CH₃]⁺ |
| **T5** | (ViSiO_{3/2})₈ | 27.06 | 631 [M-H]⁺ |
| **T6** | (ViSiO_{3/2})₁₀ | 37.59 | 789 [M-H]⁺ |
| **T7** | (EtSiO_{3/2}) ₈ | 27.76 | 619 [M-C₂H₅]⁺ |
| **T8** | C₁₆H₄₄O₁₄Si₈ | 22.01 | 669 [M-CH₃]⁺ |
| **T9** | C₂₀H₅₄O₁₅Si₈ | 23.26 | 743 [M-CH₃]⁺ |

Weiterhin sind nachstehend in Tab. 6 die analytischen Daten von weiteren, in unseren Untersuchungen eingesetzten, Lösungsmitteln und Reagenzien aufgelistet.

**Tab. 6: GC-MS-Daten der Lösungsmittel und HCl.**

| **Substanz** | **R_{T} GC** | **Massenfragment** |
|---|---|---|
| HCl | 2.70 | 36 [M]⁺ |
| EtCl | 3.87 | 63 [M-H]⁺ |
| EtOH | 4.08 | 47 [M+H]⁺ |
| Et₂O | 4.35 | 75 [M+H]⁺ |
| CH₂Cl₂ | 5.20 | 84 [M]⁺ |
| THF | 10.30 | 73 [M+H]⁺ |
| Butyliertes Hydroxytoluol (BHT) | 21.78 | 220 [M]⁺ |

Versuche zur Disilan-Spaltung wurden mit Lösungen von HCl in Et₂O unterschiedlicher Konzentrationen/Bedingungen durchgeführt.

Experimente bei Raumtemperatur wurden in einem Schlenkkolben unter Rühren durchgeführt. Dazu wurden 100 - 300 mg des Disilans vorgelegt und mit 3-5 mL der gesättigten Lösung von HCL in Et₂O versetzt. Nach einem entsprechenden Zeitraum wurde ein Teil (∼0.1 mL) der Reaktionslösung zur Analyse mittels GC-MS entnommen. Für NMR-Spektroskopie wurden 0.4 - 0.5 mL der Reaktionslösung mit 0.1 mL C₆D₆ in einem NMR-Röhrchen vermischt.

Experimente bei erhöhter Temperatur wurden in Glasampullen durchgeführt. Die Ampullen haben eine Länge von 125 mm, einen Außendurchmesser von 26 mm und eine Wandstärke von 2 mm. Das Innenvolumen bis zur Abschmelzstelle entspricht ∼43 mL. Auch hier wurden 100 - 300 mg des Disilans mit 3 - 5 mL einer gesättigten Lösung von HCL in Et₂O versetzt. Das Reaktionsgemisch wurde mit Hilfe von flüssigem Stickstoff eingefroren und im Vakuum abgeschmolzen. Die Ampulle mit der Reaktionslösung wurde anschließend auf Raumtemperatur gebracht, in ein verschraubbares Metallrohr gegeben und letztlich in einem abgesaugten Trockenschrank auf die entsprechende Reaktionstemperatur erhitzt. Der Reaktionsdruck in der Glasampulle wird auf 5-10 bar geschätzt.

Hierbei wurde der Abbau von 1,1,2,2-Tetrachlordimethyldisilan, von 1,2,-Dichlortetramethyldisilan, Chlorpentamethyldisilan, Hexamethyldisilan, Pentamethyldisilan und von Mischungen aus den vorstehend genannten ersten vier Substanzen durchgeführt. Ferner wurden der Abbau des Disilan-Rückstands aus einer technischen Müller-Rochow-Synthese sowie die Umsetzung von monomeren Trichlorsilanen mit HCl/Et₂O, die Umsetzung von monomeren Dichlorsilanen mit HCl/Et₂O, die Umsetzung von monomeren Monochlorsilanen mit HCl/Et₂O und von Mischungen aus Monosilanen mit HCl/Et₂O-Lösungen vorgenommen. Dabei wurden folgende Ergebnisse erhalten:
Jede Si-Si- sowie Si-Cl-Bindung wurde mittels einer Lösung von HCl in Diethylether in einem Schritt gespalten und in eine Siloxan-Einheit überführt. Methylgruppen der Silane (mit Ausnahme von Hexamethyldisilan, das z.T. in Pentamethylchlordisilan abreagiert) blieben unberührt, und es entstanden die Siloxane der entsprechenden Restfunktionalität:
MeSi > trifunktionale Siloxane
Me₂Si > difunktionale Siloxane, Kettenverlängerung
Me₃Si > monofunktionale Siloxane, Überkappungsreagenz

Diese Reaktionen erfolgten über eine Spaltung von Diethylether mittels HCl, die Ethanol zur Alkoholyse der Si-Cl-Gruppen lieferte. Die gebildeten Ethoxydisilane waren dabei anfälliger zur Si-Si-Bindungsspaltung und wurden so in die Monosilane überführt. Unter den gewählten Reaktionsbedingungen kam es anschließend direkt zur Kondensation der Ethoxysilane und damit zur Bildung der Siloxaneinheiten.

### Ausführungsbeispiel 4

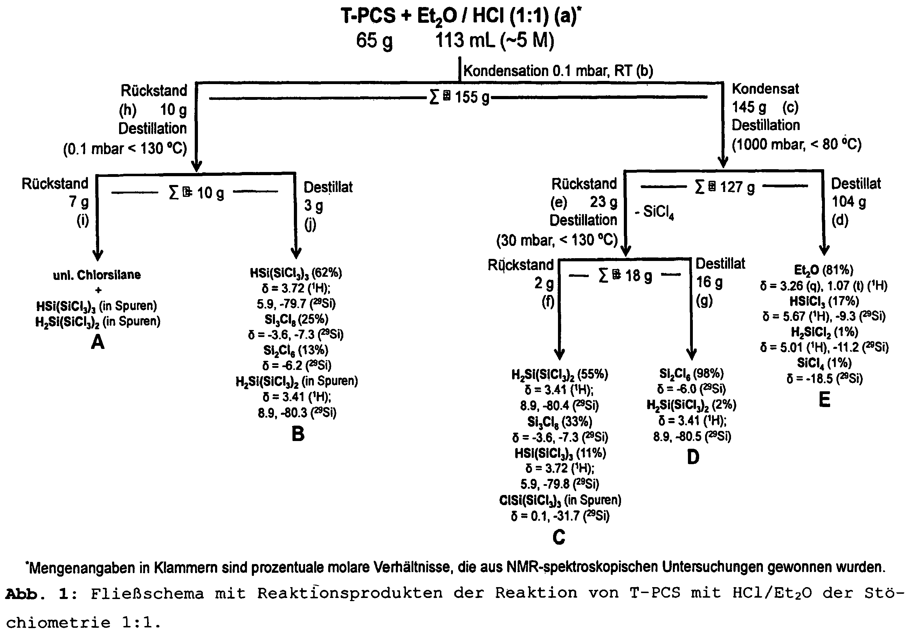

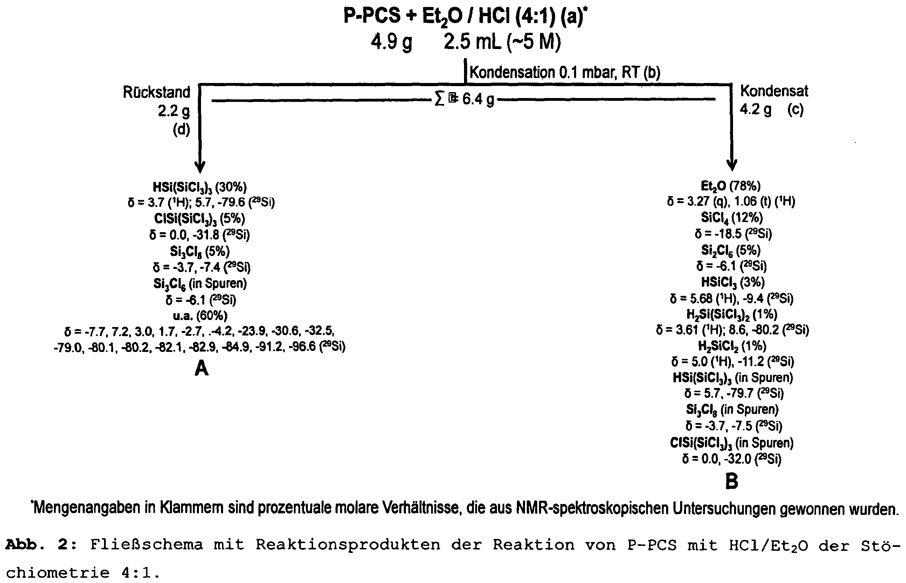

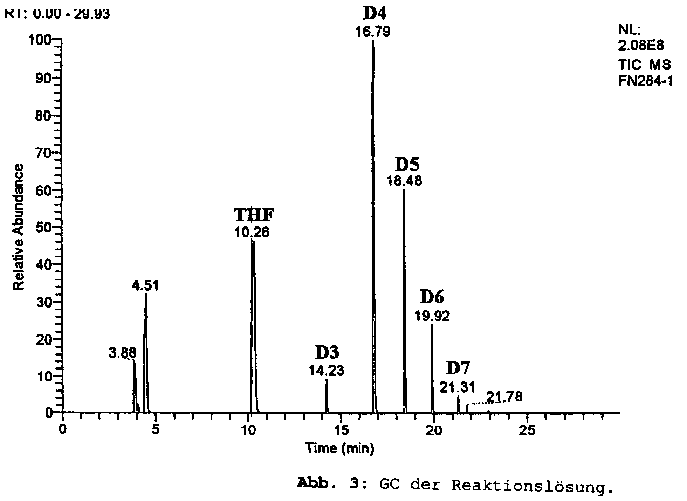

a) Eine Umsetzung von Me₂SiCl₂ mit HCl/Et₂O bei 120 °C für 67 h führt zu folgenden cyclischen Siloxanen (GC-MS-Analyse, Abb. 3).

### Abb. 3

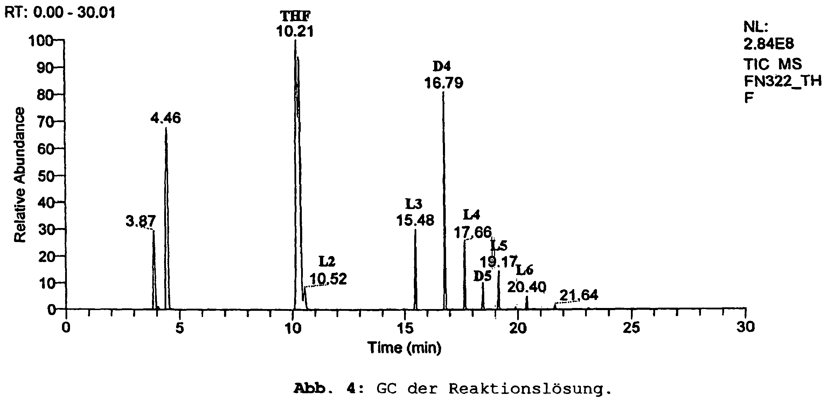

b) Eine Reaktion von Mischungen aus Me₂SiCl₂ und Me₃SiCl mit HCl/Et₂O führt nach 68 h bei 120 °C erwartungsgemäß zu einer Mischung aus cyclischen und linearen Siloxanen. Dies ist exemplarisch in Abb. 4 dargestellt.

### Abb. 4

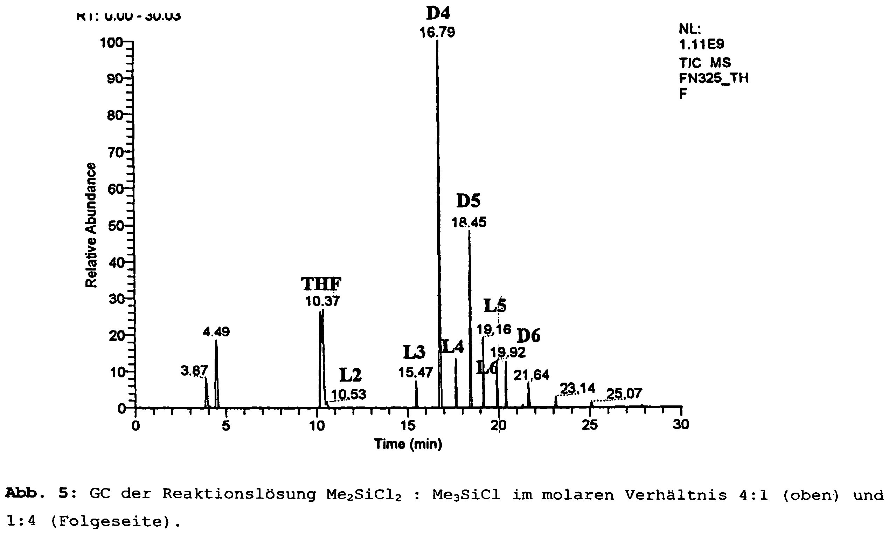

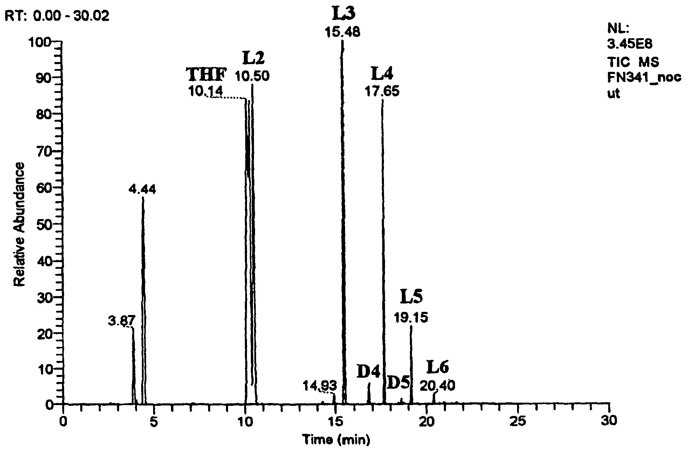

Eine Erhöhung des Me₂SiCl₂-Anteils (molares Verhältnis Me₂SiC1₂:Me₃SiCl = 4:1) führt unter vergleichbaren Bedingungen (120 °C, 68 h) zu einer deutlichen Erhöhung des Anteils an cyclischen Siloxanen in der Reaktionsmischung (Abb. 5, Seite 5).

### Abb. 5

Eine Erhöhung des Me₃SiCl-Anteils (molares Verhältnis Me₂SiCl₂:Me₃SiCl = 1:4) führt unter vergleichbaren Bedingungen (120 °C, 68 h) zu einer deutlichen Erhöhung des Anteils an linearen Siloxanen (Abb. 5, Seite 6) in der Reaktionsmischung.

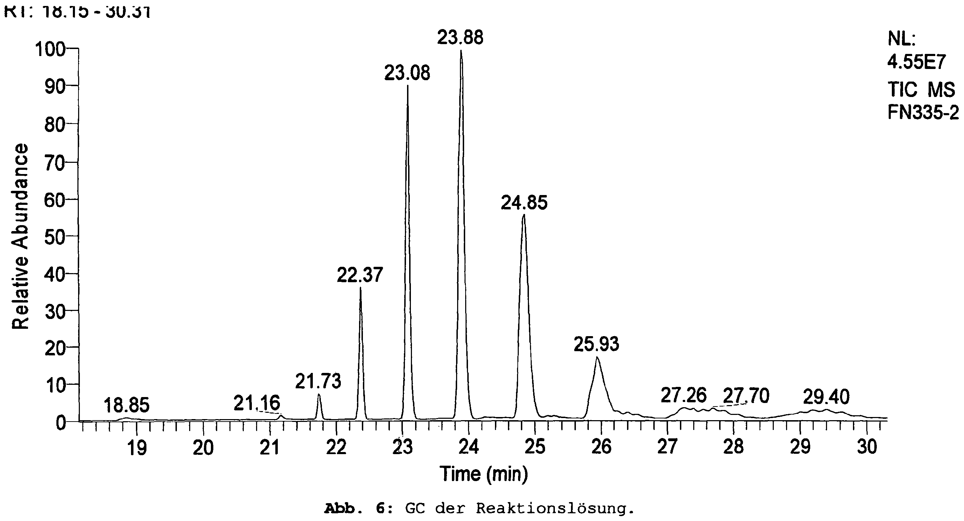

c) Die Umsetzung von MeSiCl₃ mit HCl/Et₂O für 65 h bei 120 °C führt zu den Silsesquioxanen **T1, T2** und **T3.** Zur Generalisierung dieser Reaktionssequenz werden exemplarisch weitere Trichlorsilane XSiCl₃ (X = Vinyl, Ethyl) mit HCl/Et₂O umgesetzt. Die Umsetzung von Trichlorvinylsilan (ViSiCl₃) mit HCl/Et₂O für 69 h bei 120 °C führt zur nahezu selektiven Bildung von (ViSiO_{3/2})₈ (**T5**, R_{T} = 27.06 min) neben Spuren von (ViSiO_{3/2})₁₀ (**T6**, R_{T} = 37.59 min) . Trichlorethylsilan (EtSiCl₃) reagiert mit HCl/Et₂O nach 68 h bei 120 °C ebenfalls selektiv zum entsprechenden Silsesquioxan (EtSiO_{3/2})₈ (**T7**, R_{T} = 27.75 min).
Erwartungsgemäß reagieren Mischungen aus MeSiCl₃, EtSiCl₃ und ViSiCl₃ zu Silsesquioxanen mit statistischer Verteilung der Methyl-, Ethyl- und Vinylgruppen an den "Ecken" der Silsesquioxane (Abb. 6, Tab. 7).

### Abb. 6

**Tab. 7: GC-MS-Daten "gemischter" Silsesquioxane.**

| **R_{T} GC** | **Silsesquioxan** | **Massenfragment** |
|---|---|---|
| **22.37** | (MeSiO_{3/2})₆(ViSiO_{3/2})(EtSiO_{3/2}) | 562 [M-H]⁺ |
| **23.08** | (MeSiO_{3/2})₅(ViSiO_{3/2})₂ (EtSiO_{3/2}) | 574 [M-H]⁺ |
| **23.88** | (MeSiO_{3/2}) ₄(ViSiO_{3/2})₂ (EtSiO_{3/2})₂ | 589 [M-H]⁺ |
| **24.85** | (MeSiO_{3/2}) ₃(ViSiO_{3/2})₃(EtSiO_{3/2})₂ | 602 [M]⁺ |
| **25.93** | (MeSiO_{3/2}) ₂(ViSiO_{3/2})₃(EtSiO_{3/2})₃ | 602 [M-CH₃]⁺ |

## Patentansprüche

1. Verfahren zur Spaltung von Silicium-Silicium-Bindungen und/oder von Silicium-Chlor-Bindungen in Poly- und/oder Oligosilanen, **dadurch gekennzeichnet, dass** man das Poly- und/oder Oligosilan in Ether oder Ether-Salzsäure-Lösung löst oder suspendiert.

2. Verfahren nach Anspruch 1, **dadurch gekennzeichnet, dass** man aus halogenierten Polysilanen, insbesondere aus chlorierten Polysilanen, speziell perchlorierten Polysilanen (PCS), durch Spaltung von Si-Si-Bindungen halogenierte Oligosilane, insbesondere chlorierte Oligosilane, herstellt.

3. Verfahren nach Anspruch 1 oder 2 **dadurch gekennzeichnet, dass** man das halogenierte Polysilan in Ethylether (Et₂O) oder Ethylether-Salzsäure-Lösung, insbesondere Diethylether oder Diethylether-Salzsäure-Lösung, löst oder suspendiert.

4. Verfahren nach einem der vorangehenden Ansprüche, **dadurch gekennzeichnet, dass** man als halogenierte Oligosilane solche mit der Formel SiₙX₂ₙ₊₂, insbesondere solche mit der Formel SiₙCl₂ₙ₊₂, darstellt.

5. Verfahren nach einem der vorangehenden Ansprüche, **dadurch gekennzeichnet, dass** man thermisch hergestelltes halogeniertes Polysilan, insbesondere perchloriertes Polysilan (T-PCS), umsetzt.

6. Verfahren nach einem der Ansprüche 1 bis 4, **dadurch gekennzeichnet, dass** man plasmachemisch hergestelltes halogeniertes Polysilan, insbesondere perchloriertes Polysilan (P-PCS), umsetzt.

7. Verfahren nach einem der Ansprüche 5 oder 6, da- durch gekennzeichnet, dass man zur Darstellung von Si₂Cl₆ T/P-PCS, insbesondere T-PCS, mit Et₂O bzw. HCl in Et₂O umsetzt.

8. Verfahren nach einem der Ansprüche 5 oder 6, **dadurch gekennzeichnet, dass** man zur Darstellung von XSi(SiCl₃)₃ (X = H, Cl) T/P-PCS mit HCl in Et₂O umsetzt.

9. Verfahren nach einem der Ansprüche 5 oder 6 **dadurch gekennzeichnet, dass** man zur Darstellung von X₂Si(SiCl₃)₂ (X = H, Cl) T/P-PCS mit HCl in Et₂O umsetzt.

10. Verfahren nach einem der vorangehenden Ansprüche, **dadurch gekennzeichnet, dass** die aus der Umsetzung gewonnene Lösung isoliert wird.

11. Verfahren nach einem der vorangehenden Ansprüche, **dadurch gekennzeichnet, dass** mindestens ein halogeniertes Oligosilan aus der erhaltenen Lösung isoliert wird. Hauptantrag

12. Verfahren nach einem der vorangehenden Ansprüche, **dadurch gekennzeichnet, dass** es zur Spaltung von Poly- und/oder Oligosilanen und zum Aufbau von Siloxanen eingesetzt wird.

13. Verfahren nach Anspruch 12, **dadurch gekennzeichnet, dass** jede Si-Si- und/oder Si-Cl-Bindung durch eine Lösung von HCl in Diethylether thermisch gespalten und in eine Siloxaneinheit überführt wird.

14. Verfahren nach Anspruch 12 oder 13, **dadurch gekennzeichnet, dass** es zum Abbau von Mischungen aus Organohalogendisilanen, insbesondere mit chlorierten Monosilanen, eingesetzt wird.

15. Verfahren zur Spaltung von Si-Cl-Bindungen in Monosilanen **dadurch gekennzeichnet, dass** man das Monosilan in einer Lösung von HCl in Et₂O löst oder suspendiert und damit Siloxane aufbaut.

## Claims

1. A method for the cleavage of silicon-silicon bonds and/or silicon-chlorine bonds in poly-and/or oligosilanes, **characterized in that** poly- and/or oligosilane is dissolved or suspended in ether or ether-hydrochloric acid solution.

2. Method according to claim 1, **characterised in that** halogenated oligosilanes, in particular chlorinated oligosilanes, are produced from halogenated polysilanes, in particular from chlorinated polysilanes, especially perchlorinated polysilanes (PCS) by cleavage of Si-Si bonds.

3. Method according to claim 1 or 2, **characterised in that** the halogenated polysilane is dissolved or suspended in ethylether (Et₂O) or ethylether-hydrochloric acid solution, in particular diethylether or diethylether-hydrochloric acid solution.

4. Method according to one of the previous claims, **characterised in that** the halogenated oligosilanes produced are such with the formula SiₙX₂ₙ₊₂, in particular such with the formula SiₙCl₂ₙ₊₂.

5. Method according to one of the previous claims, **characterised in that** thermically produced halogenated polysilane, in particular perchlorinated polysilane (T-PCS), is reacted.

6. Method according to one of the claims 1 to 4, **characterised in that** plasma-chemically produced halogenated polysilane, in particular perchlorinated polysilane (P-PCS), is reacted.

7. Method according to one of the claims 5 or 6, **characterised in that** for the production of Si₂Cl₆ T/P-PCS, in particular T-PCS, is reacted with Et₂O or HCl in Et₂O, respectively.

8. Method according to one of the claims 5 or 6, **characterised in that** for the production of XSi(SiCl₃)₃ (X = H, Cl) T/P-PCS is reacted with HCl in Et₂O.

9. Method according to one of the claims 5 or 6, **characterised in that** for the production of X₂Si(SiCl₃)₂ (X = H, Cl) T/P-PCS is reacted with HCl in Et₂O.

10. Method according to one of the previous claims, **characterised in that** the solution obtained from the conversion is isolated.

11. Method according to one of the previous claims, **characterised in that** at least one halogenated oligosilane is isolated from the obtained solution.

12. Method according to one of the previous claims, **characterised in that** it is applied to the cleavage of poly- and/or oligosilanes and for the assembly of siloxanes.

13. Method according to claim 12, **characterised in that** every Si-Si and/or Si-Cl-bond is cleaved thermically by a solution of HCl in diethylether and is converted to a siloxane unit.

14. Method according to claim 12 or 13, **characterised in that** it is applied to the degradation of mixtures of organohalodisilanes, in particular with chlorinated monosilanes.

15. Method for the cleavage of Si-CI bonds in monosilanes **characterized in that** the monosilane is dissolved or suspended in a solution of HCl in Et₂O, and thereby forming siloxanes.

## Revendications

1. Procédé servant à dissocier des liaisons silicium - silicium et/ou des liaisons silicium - chlore dans des polysilanes et/ou des oligosilanes, **caractérisé en ce qu'**est dissout ou mis en suspension le polysilane et/ou l'oligosilane dans de l'éther ou dans une solution d'éther-acide chlorhydrique.

2. Procédé selon la revendication 1, **caractérisé en ce qu'**on fabrique à partir de polysilanes halogénés, en particulier à partir de polysilanes chlorés des polysilanes perchlorés de manière spécifique (PCS) des oligosilanes halogénés par la dissociation de liaisons Si-Si, en particulier des oligosilanes chlorés.

3. Procédé selon la revendication 1 ou 2, **caractérisé en ce qu'**on dissout ou on met en suspension le polysilane halogéné dans de l'éther éthylique (Et₂O) ou dans une solution d'éther éthylique-acide chlorhydrique, en particulier dans de l'éther diéthylique ou dans une solution d'éther diéthylique-acide chlorhydrique.

4. Procédé selon l'une quelconque des revendications précédentes, **caractérisé en ce qu'**on constitue en tant qu'oligosilanes halogénés ceux avec la formule SiₙX₂ₙ₊₂, en particulier ceux avec la formule SiₙCl₂ₙ₊₂.

5. Procédé selon l'une quelconque des revendications précédentes, **caractérisé en ce qu'**on fait réagir un polysilane halogéné fabriqué thermiquement, en particulier un polysilane perchloré (T-PCS).

6. Procédé selon l'une quelconque des revendications 1 à 4, **caractérisé en ce qu'**on fait réagir un polysilane halogéné fabriqué chimiquement au plasma, en particulier un polysilane perchloré (P-PCS).

7. Procédé selon l'une quelconque des revendications 5 ou 6, **caractérisé en ce qu'**on fait réagir pour constituer du Si₂Cl₆ du TP-PCS, en particulier du T-PCS, avec du Et₂O ou HCl en Et₂O.

8. Procédé selon l'une quelconque des revendications 5 ou 6, **caractérisé en ce qu'**on fait réagir pour constituer du XSi(SiCl₃)₃, (X = H, Cl) du T/P-PCS avec HCl en Et₂O,

9. Procédé selon l'une quelconque des revendications 5 ou 6, **caractérisé en ce qu'**on fait réagir pour constituer du X₂Si(SiCl₃)₂ (X = H, Cl) du T/P-PCS avec HCl en Et₂O.

10. Procédé selon l'une quelconque des revendications précédentes, **caractérisé en ce que** la solution obtenue à partir de la réaction est isolée.

11. Procédé selon l'une quelconque des revendications précédentes, **caractérisé en ce qu'**au moins un oligosilane halogéné est isolé de la solution obtenue.

12. Procédé selon l'une quelconque des revendications précédentes, **caractérisé en ce qu'**il est utilisé pour dissocier des polysilanes et/ou des oligosilanes et pour produire des siloxanes.

13. Procédé selon la revendication 12, **caractérisé en ce que** chaque liaison Si-Si et/ou liaison Si-CI est thermiquement dissociée par une solution de HCl dans de l'éther diéthylique et est transformée en un motif siloxane.

14. Procédé selon la revendication 12 ou 13, **caractérisé en ce qu'**il est utilisé pour éliminer des mélanges composés de disilanes organohalogénés, en particulier avec des monosilanes chlorés.

15. Procédé pour dissocier des liaisons Si-CI dans des monosilanes **caractérisé en ce que** l'on dissout ou met en suspension le monosilane dans une solution de HCl dans Et₂O et ainsi produire des siloxanes.
